# EUROPEAN PATENT APPLICATION

(11) **EP 2 739 110 A1**
(43) Date of publication of application: **04.06.2014**
(21) Application number: 12818416.5
(22) Date of filing: 04.06.2012
(51) Int. Cl.: H04W 74/04, H04W 4/04

(54) **WIRELESS COMMUNICATION SYSTEM, BASE STATION, CONTROL NODE, MOBILE STATION, METHOD RELATING TO THESE, AND COMPUTER READABLE MEDIUM**

(30) Priority: 25.07.2011 JP 2011162412
(71) Applicant: NEC Corporation, Tokyo 108-8001 (JP)
(72) Inventor: IWAI, Takanori, Tokyo 108-8001 (JP); AKIYOSHI, Ippei, Tokyo 108-8001 (JP)
(74) Representative: MacDougall, Alan John Shaw
(86) International application number: PCT/JP2012/003660
(87) International publication number: WO 2013/014847

(57) **Abstract**

A wireless communication system (1) includes a mobile station (200) and an upstream network (10) that sends a paging message to page the mobile station (200). The paging message includes first information that specifies a timing for the mobile station (200) to initiate communication with the external network (9) in response to receiving the paging message. Then, it is possible, for example, for the upstream network (10) to control the timing for the mobile station (200) in the idle state to initiate communication with the external network (9).

## Description

### Technical Field

The present invention relates to paging of a mobile station in a multiple access wireless communication system.

### Background Art

In a multiple access wireless communication system, a radio resource including at least one of time, frequency, and transmission power is shared among mobile stations to thereby enable the mobile stations to perform wireless transmission substantially at the same time. Typical multiple access schemes are: TDMA (Time Division Multiple Access), FDMA (Frequency Division Multiple Access), CDMA (Code Division Multiple Access), OFDMA (Orthogonal Frequency Division Multiple Access), or a combination thereof.

Unless noted otherwise, the term "wireless communication system" used in this specification indicates a multiple access wireless communication system. The wireless communication system includes mobile stations and an upstream network. The upstream network includes a base station, a relay node that relays traffic, and a control node that performs a radio resource management, a mobility management, a bearer management and the like.

When new downlink traffic (downlink data or incoming voice call) for a mobile station which is in an idle state arrives from an external network, the upstream network sends a paging message to the mobile station. A mobile station in the idle state performs Discontinuous Reception (DRX) in order to receive the paging message. Then, the mobile station initiates signaling for communication to receive the downlink traffic in response to receiving the paging message addressed to itself. This signaling includes a response message from the mobile station to respond to the paging. The response message includes an establishment request for establishing a control connection or a service request for establishing a communication path (bearer) to transfer user data, or both of them. In response to receiving the response message, the network performs a procedure for establishing the control connection and the communication path (bearer) necessary to send the downlink traffic to the mobile station.

For example, when an incoming call addressed to a mobile station arrives at a packet-switched domain of WCDMA (Wideband Code Division Multiple Access), an RNC (Radio Network Controller) in a network sends a paging message to a mobile station via a base station (NodeB). When the mobile station in the idle state (in a CELL_PCH state or an URA_PCH state) detects the paging message addressed to itself from a PCH (Paging Channel) that is transmitted on an S-CCPCH (Secondary Common Control Physical Channel), the mobile station in the idle state sends a Service Request to the network (i.e., an SGSN (Serving GPRS Support Node)). In response to receiving the Service Request, the network establishes a communication path (a Radio Access Bearer) for sending user data. The Service Request procedure using the paging message in the packet-switched domain of WCDMA is specified in 3GPP (3rd Generation Partnership Project) TS 23.060 V9.9.0, Chapter 6.12.2.

Meanwhile, in the case of LTE (Long Term Evolution), a base station (eNodeB) in a network sends a paging message to a mobile station. When the mobile station in the idle state (in an RRC_IDLE (ECM_IDLE) state) detects the paging message addressed to itself from a PCH (Paging Channel) transmitted on a PDSCH (Physical Downlink Shared Channel), the mobile station sends an establishment request (an RRC Connection Request) for establishing a control connection to the network (i.e., eNodeB). In response to receiving the RRC Connection Request, the network establishes a control connection (an RRC Connection). After that, the mobile station sends a control message (a NAS message Service Request) for requesting a service to the network (i.e., an MME (Mobility Management Entity)). In response to receiving the Service Request, the network establishes a communication path (a Radio Access Bearer) for sending user data. The Service Request procedure using the paging message in LTE is specified in 3GPP (3rd Generation Partnership Project) TS 23.401 V9.9.0, Chapter 5.3.4.3.

The paging message usually indicates an identifier of a mobile station (e.g., TMSI (Temporary Mobile Subscriber Identify), P-TMSI (Packet TMSI), or M-TMSI (MME-TMSI)) and is sent per each mobile station. Meanwhile, Patent Literature 1 discloses sending of a paging message indicating an identifier that is defined for a mobile-station group including a plurality of mobile stations. That is, Patent Literature 1 performs paging by the unit of the mobile-station group to thereby reduce channel resources required for paging more than in the case of paging each mobile station.

### Citation List

### Patent Literature

Patent Literature 1: Japanese Unexamined Patent Application Publication No. 2004-221759

### Summary of Invention

### Technical Problem

The inventor of the present application conducted a comprehensive study on scenarios to accommodate communications of an M2M (machine to machine) network in a wireless communication system such as WCDMA and LTE. An M2M network is also called a sensor network. In the case of accommodating communications of an M2M network in a wireless communication system, functions of a mobile station are disposed at respective machines (e.g., vending machines, gas meters, electricity meters, or automobiles) and respective sensors (e.g., sensors for environment, agriculture, or traffic). Then, a monitoring system (i.e., a computer) disposed at a monitoring site such as a data center collects information (e.g., sales information, inventory information, or measurement information of sensors) held by such machines and sensors via a wireless communication system.

More specifically, a monitoring system sends transmission data including a transmission request message to an address (e.g., an e-mail address and an IP address) assigned to a mobile station that is disposed at a machine (or a sensor). In response to receiving the transmission data from the monitoring system, the network of the wireless communication system pages the mobile station corresponding to the destination address. Then, the mobile station, which has responded to the paging, sends the information (e.g., sales information, inventory information, and measurement information of the sensor) according to the transmission request message.

The inventor has found out that there is a following problem in scenarios to accommodate communications of an M2M (machine to machine) network in a wireless communication system. Simultaneous communications between a monitoring system and a number of machines or sensors in an M2M network increase a load of the monitoring system. For this reason, under the present circumstances, the monitoring system sends transmission request messages to the plurality of machines or sensors at different timings to thereby smooth the traffic in the M2M network. This avoids an increase in the load of the monitoring system of the M2M network. However, in this method of smoothing traffic in each M2M network, a network load of the wireless communication system may not be sufficiently suppressed. This is because the wireless communication system generally accommodates communications of a plurality of M2M networks. Smoothing traffic in each M2M network does not necessarily smooth a network load of the wireless communication system. In order to effectively reduce the network load of the wireless communication system, it is desirable that not only an external network and a mobile station but also the wireless communication system can control a timing for a mobile station (e.g., a machine or a sensor related to an M2M network) in the idle state to initiate communication with the external network (e.g., the monitoring system of the M2M network).

One of the objectives of the present invention is to provide a wireless communication system that is capable of controlling a timing for a mobile station in the idle state to initiate communication with an external network. Moreover, another objective of the present invention is to provide a base station, a control node, a mobile station, a method, and a program that are used in this wireless communication system.

### Solution to Problem

A first aspect includes a wireless communication system. The wireless communication system includes a mobile station and an upstream network that sends a paging message for paging the mobile station. Here, the paging message includes first information that specifies a timing for the mobile station to initiate communication with an external network in response to receiving the paging message.

A second aspect includes a base station used in a wireless communication system. The base station includes a wireless communication unit that wirelessly transmits a paging message to page a mobile station on a downlink channel. The paging message includes first information that specifies a timing for the mobile station to initiate communication with an external network in response to receiving the paging message.

A third aspect includes a control node used in a wireless communication system. The control node includes a control unit that requests a base station to send a paging message to page a mobile station. The paging message includes first information that specifies a timing for the mobile station to initiate communication with an external network in response to receiving the paging message.

A fourth aspect includes a mobile station used in a wireless communication system. The mobile station includes a wireless communication unit and a communication control unit. The wireless communication unit receives a downlink channel transmitted from a base station. The communication control unit initiates communication with an external network in response to a paging message transmitted on the downlink channel. The paging message includes first information that specifies a timing for the mobile station to initiate the communication with the external network in response to receiving the paging message.

A fifth aspect includes a paging method. The paging method includes sending a paging message including first information to page a mobile station. The first information specifies a timing for the mobile station to initiate communication with an external network in response to receiving the paging message.

A sixth aspect includes a method for processing a paging message by a mobile station. The method includes initiating communication with an external network in response to a paging message transmitted on a downlink channel from a base station. The paging message includes first information that specifies a timing for the mobile station to initiate the communication with the external network in response to receiving the paging message.

A seventh aspect includes a program for causing a computer to execute the method according to the above-mentioned fifth aspect.

An eighth aspect includes a program for causing a computer to execute the method according to the above-mentioned sixth aspect.

### Advantageous Effects of Invention

According to the above-mentioned aspects, it is possible to provide a wireless communication system that is capable of controlling a timing for a mobile station in the idle state to initiate communication with an external network, and a base station, a control node, a mobile station, a method, and a program that are used in this wireless communication system.

### Brief Description of Drawings

Fig. 1 is a block diagram showing a configuration example of a wireless communication system according to a first embodiment;
Fig. 2 is a block diagram showing a configuration example of a base station (eNodeB) shown in Fig. 1;
Fig. 3 is a block diagram showing a configuration example of a mobile station (UE) shown in Fig. 1;
Fig. 4 is a block diagram showing a configuration example of a mobility management node (MME) shown in Fig. 1;
Fig. 5 is a sequence diagram showing a specific example of a paging procedure in the wireless communication system shown in Fig. 1;
Fig. 6 is a diagram showing a specific example of a paging message in the first embodiment;
Fig. 7 is a flowchart showing a specific example of a processing method of the paging message by the mobile station (UE) shown in Fig. 1;
Fig. 8 is a sequence diagram showing a specific example of a paging procedure in a wireless communication system according to a second embodiment;
Fig. 9 is a diagram showing a specific example of a paging message in the second embodiment;
Fig. 10 is a diagram showing a specific example of a paging message in a third embodiment;
Fig. 11 is a flowchart showing a specific example of a processing method of the paging message by a mobile station (UE) in the third embodiment;
Fig. 12 is a diagram showing a specific example of a paging message in a fourth embodiment;
Fig. 13 is a flowchart showing a specific example of a processing method of the paging message by the mobile station (UE) according to the fourth embodiment;
Fig. 14 is a diagram showing a specific example of a paging message in a fifth embodiment; and
Fig. 15 is a flowchart showing a specific example of a processing method of the paging message by the mobile station (UE) according to the fifth embodiment.

### Description of Embodiments

Hereinafter, specific embodiments are explained in detail with reference to the drawings. In the drawings, the same or corresponding elements are denoted by the same reference numerals, and repeated explanation of such elements shall be omitted as necessary for clarity of the explanation.

### <First embodiment>

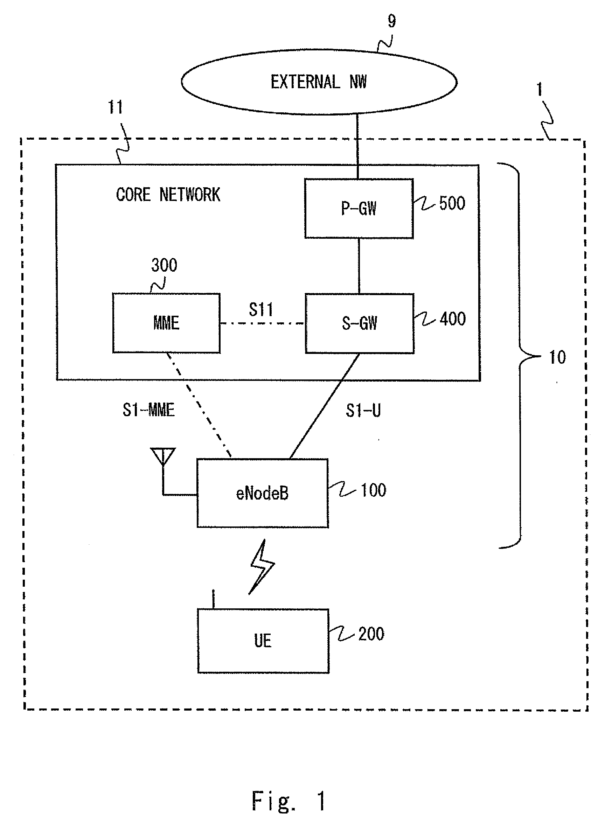

Fig. 1 is a block diagram showing a configuration example of a mobile communication system 1 according to this embodiment. Note that this embodiment explains a case where the wireless communication system 1 is an LTE system.

The mobile communication system 1 includes an upstream network 10 and a mobile station 200. The upstream network 10 is mostly administrated by an operator who provides mobile communication services. In LTE, the mobile station 200 is called an UE (User Equipment). The mobile station 200 is connected to the upstream network 10 via a radio access technology.

The upstream network 10 has a function to relay user data that is transferred between the mobile station 200 and an external network 9. In LTE, the external network 9 is called a PDN (Packet Data Network). The upstream network 10 performs, for example, a radio resource management, a mobility management, and a bearer management related to the mobile station 200. Specifically, the upstream network 10 includes a base station 100 and a core network 11 as shown in Fig. 1.

The base station 100 is connected to the mobile station 200 via the radio access technology and relays the user data between the mobile station 200 and the core network 11. In LTE, the base station 100 is called eNodeB (Evolved NodeB) and performs radio resource management, handover control, scheduling of radio resources and the like of the mobile station 200.

The core network 11 corresponds to a packet-switched network (EPC (Evolved Packet Core)) specified by 3GPP. The core network 11 includes a mobility management node 300 and transfer nodes 300 and 400. The mobility management node 300 is a control node that performs, for example, a mobility management of the mobile station 200 and a setup of a communication path (bearer) for user data transferred between the mobile station 200 and the external network 9. Regarding such control, the mobility management node 300 performs signaling with the base station 100 and with the transfer node 200. In LTE, the mobility management node 300 is called MME (Mobility Management Entity).

The transfer nodes 400 and 500 relay the user data between the base station 100 and the external network 9. The transfer node 400 provides a transfer function (routing and forwarding) of the user data between the base station 100 and the core network 11. Meanwhile, the transfer node 500 provides a transfer function (routing and forwarding) of the user data between the external network 9 and the core network 11. In LTE, the transfer node 400 is called S-GW (Serving Gateway), and the transfer node 500 is called P-GW (Packet Data Network Gateway).

Further, the upstream network 10 shown in Fig. 1 sends a paging message in order to page the mobile station 200 in the idle state. In LTE, the paging message is contained in a PCH (Paging Channel) transmitted on a PDSCH (Physical Downlink Shared Channel). In this embodiment, the paging message includes timing information (first information) that specifies a timing for the mobile station 200 to initiate communication with the external network 9 in response to receiving the paging message. The mobile station 200 delays execution of signaling (i.e., a service request) for communicating with the external network 9 based on the timing information. In other words, the mobile station 200 does not initiate signaling for communicating with the external network 9 immediately upon receiving the paging message; instead, the mobile station 200 waits until a timing specified by the timing information and then initiates signaling.

The timing information contained in the paging message should only specify a timing for the mobile station 200 to initiate communication with the external network 9 in response to receiving the paging message. For example, the timing information may identify "a transmission waiting time" that is the interval from when the mobile station 200 receives the paging message until start of signaling (a service request). Alternatively, the timing information may identify "a transmission start time" at which the mobile station 200 is allowed to initiate signaling (a service request).

That is, in the wireless communication system 1 according to this embodiment, the upstream network 10 adjusts contents of the timing information, so that the upstream network 10 can control the timing for the mobile station 200 (e.g., a machine or a sensor related to an M2M network) in the idle state to initiate communication with the external network (e.g., a monitoring system of an M2M network). This facilitates smoothing of network load of the wireless communication system 1 even in the case of accommodating an M2M network in the wireless communication system 1.

The contents of the timing information, which is the timing for the mobile station 200 to initiate communication with the external network (i.e., a start timing of signaling of a service request), may be determined by an instruction from an OAM (Operation Administration and Maintenance) system (not shown) based on an operation by an operator. For example, the operator may determine the contents of the timing information for respective mobile stations 200 such that communication start timings of a number of mobile stations 200 used in an M2M network are distributed and notify the mobility management node 300 of the determined content of the timing information via an OAM system.

Alternatively, the mobility management node 300 may dynamically determine the contents of the timing information according to a situation when a paging request is occurred. For example, when a number of paging requests, exceeding a predetermined reference, occurs at the same time, the mobility management node 300 may dynamically determine the contents of the timing information for the respective mobile stations 200 such that the communication start timings of the mobile stations 200 are distributed.

In general, paging is performed in response to when downlink data addressed to the mobile station 200 arrives at the core network 11 from the external network 9. In a manner similar to general paging, sending of the paging message including the timing information explained in this embodiment may be performed in response to when the downlink data addressed to the mobile station 200 arrives at the core network 11. Even in this case, the communication start timing of the mobile station 200 responding to the paging may be controlled by the upstream network 10.

Paging to the mobile station 200 in this embodiment may be performed regardless of whether the downlink data to be transferred to the mobile station 200 arrives at the core network 11 from the external network 9. In other words, paging to the mobile station 200 in this embodiment may be performed to initiate communication between the mobile station 200 and the external network 9 autonomously by the upstream network 10. This eliminates the need for a corresponding node (e.g., a monitoring system of an M2M network), which is disposed in the external network 9 and communicates with the mobile station 200, to send data for initiating communication with the mobile station 200. This further eliminates the need for exceptional processing to handle the case where data which has arrived from the external network 9 cannot be sent to the mobile station 200.

Note that the upstream network 10 may perform normal paging in response to arriving data from the external network 9 in addition to autonomous paging. The autonomous paging message explained in this embodiment may be distinguished from the normal paging message based on the data arriving from the external network 9 by, for example, a message type.

Hereinafter, paging to the mobile station 200 in the wireless communication system 1 is explained in detail. Configuration examples of the base station 100, the mobile station 200, and the mobility management node 300 which are related to the paging are explained first, and then a detailed explanation of the paging procedure is given.

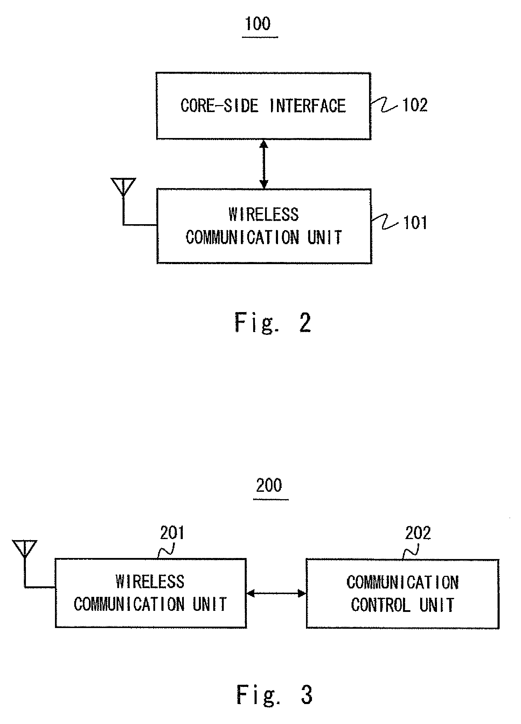

Fig. 2 is a block diagram showing a configuration example of the base station 100. Note that Fig. 2 shows only main components related to the explanation of the paging procedure according to this embodiment. The wireless communication unit 101 wirelessly transmits a downlink signal including a plurality of downlink channels (physical channels) and receives an uplink signal including a plurality of uplink channels from the mobile station 200. The plurality of downlink channels include a down channel for sending a paging message. That is, the wireless communication unit 101 wirelessly transmits the paging message on a downlink channel in order to page the mobile station 200.

The core-side interface 102 is an interface used for communication with the mobility management node 300 and the transfer node 400 that are disposed in the core network 11. That is, the interface 102 is used for transmission and reception of a control message to and from the mobility management node 300 including reception of the paging request.

Fig. 3 is a block diagram showing a configuration example of the mobile station 200. Fig. 3 shows only main components related to explanation of the paging procedure according to this embodiment. The wireless communication unit 201 receives the downlink signal including the plurality of downlink channels (physical channels) from the base station 100. Moreover, the wireless communication unit 201 transmits the uplink signal including the plurality of uplink channels to the base station 100.

The communication control unit 202 receives the paging message transmitted on the downlink channel from the base station 100 via the wireless communication unit 201. Further, the communication control unit 202 controls the wireless communication unit 201 to initiate communication with the external network 9 in response to the paging message addressed to the mobile station itself. Note that when the paging message addressed to the mobile station itself includes the timing information, the communication control unit 202 delays execution of signaling (transmission of a Service Request) for communicating with the external network 9 according to the timing information. In other words, the communication control unit 202 changes, based on the timing information, the waiting time from reception of the paging message until start of the signaling for communicating with the external network 9.

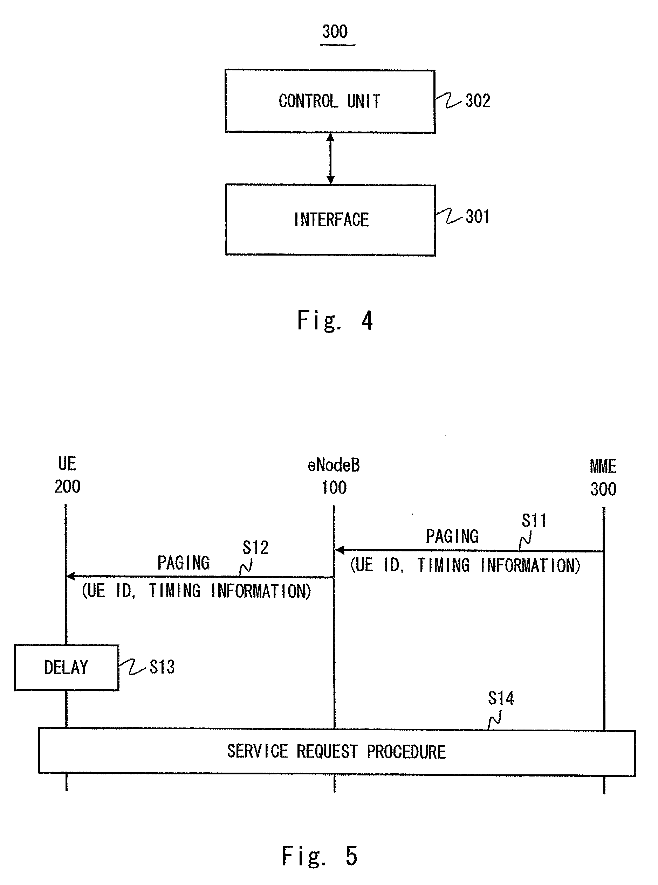

Fig. 4 is a block diagram showing a configuration example of the mobility management node 300. Fig. 4 shows only the main components related to the explanation of the paging procedure according to this embodiment. An interface 301 is a communication interface provided for transmission and reception (signaling) of a control signal to and from the base station 100. The control unit 302 requests the base station 100 to page the mobile station 200 via the interface 301. The paging request sent to the base station 100 includes the timing information that specifies a timing for the mobile station 200 to initiate communication with the external network 9 in response to receiving the paging message.

Note that, as already stated, the paging request to the base station 100 may be performed in response to when the downlink data to be sent to the mobile station 200 arrives at the core network 10 from the external network 9. In this case, the control unit 302 may send the paging request to the base station 100 in response to a notification (notification of the arrival of the downlink data) from the transfer node 300 in a manner similar to general paging.

Moreover, the control unit 302 may autonomously perform the paging request to the base station 100 regardless of whether or not the downlink data has arrived at the core network 10. In this case, the autonomous paging request by the control unit 302 may be performed at a timing that is set to the mobility management node 300 beforehand. Alternatively, the autonomous paging request by the control unit 302 may be performed in response to an instruction based on an operation by an operator from an OAM (Operation Administration and Maintenance) system (not shown).

Fig. 5 is a sequence diagram showing the paging procedure in this embodiment. In Step S11, the mobility management node (MME) 300 sends the paging request to the base station (eNodeB) 100. This paging request includes the timing information and an identifier (UE ID) for identifying the mobile station 200. Since the UE ID may only identify the mobile station 200 to be paged, an identifier similar to the one in the normal paging may be used as the UE ID. For example, the UE ID may be M-TMSI, GUTI (Globally Unique Temporary ID), or IMSI (International Mobile Subscriber Identity).

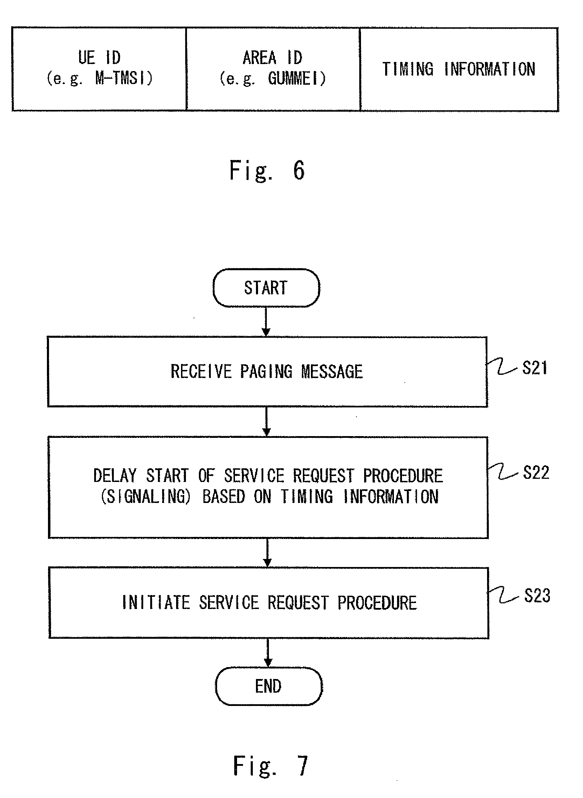

In Step S12, the base station 100 sends the paging message that specifies the mobile station 200 on the downlink channel in response to receiving the paging request from the mobility management node 300. This paging message includes the identifier (UE ID) for identifying the mobile station 200 and the timing information. A configuration example of the paging message of this embodiment is shown in Fig. 6. In the example of Fig. 6, the paging message includes an area ID in addition to the UE ID and the timing information. The area ID is information that can identify an area where paging takes place (in LTE, all tracking areas served by MME). The area ID is, for example, an identifier (GUMMEI (Globally Unique MME Identifier)) of the mobility management node 300.

In Step S13, the mobile station 200 receives the paging message. Then, when the UE ID contained in the paging message matches its own UE ID, the mobile station 200 refers to the timing information contained in the paging message and delays execution of signaling (transmission of a service request) for communicating with the external network 9 according to the timing information.

In Step S14, the mobile station 200 initiates signaling (transmission of a service request) for communicating with the external network 9. In response to this service request, the service request procedure is initiated among the mobile station 200, the base station 100, the mobility management node 300, and the transfer node 400 (not shown). Note that the service request procedure is the same as the one specified in "Network Triggered Service Request", 3GPP TS 23.401 V9.9.0, Chapter 5.3.4.3. That is, the mobile station 200 may initiate signaling for communicating with the external network 9 in a procedure similar to that in the case when the mobile station 200 autonomously performs the Service Request (i.e., sending of a NAS message Service Request).

Fig. 7 is a flowchart showing a specific example of a procedure for processing the paging message by the mobile station 200. In Step S21, the communication control unit 202 receives the paging message via the wireless communication unit 201. In Step S22, the communication control unit 202 delays signaling for initiating communication with the external network 9, i.e., a start timing of the Service Request procedure, based on the timing information contained in the paging message addressed to the mobile station itself. In Step S23, the communication control unit 202 initiates the service request procedure on condition that the timing specified in the timing information has arrived.

As mentioned above, in paging to the mobile station 200 in this embodiment, the paging message including the timing information is sent to the mobile station 200. The timing information specifies the timing for the mobile station 200 to initiate communication with the external network 9 in response to receiving the paging message. Accordingly, in this embodiment, it is possible for the upstream network 10 to control the timing for the mobile station 2 in the idle state (e.g., a machine or a sensor related in an M2M network) to initiate communication with the external network (e.g., a monitoring system of an M2M network).

### <Second embodiment>

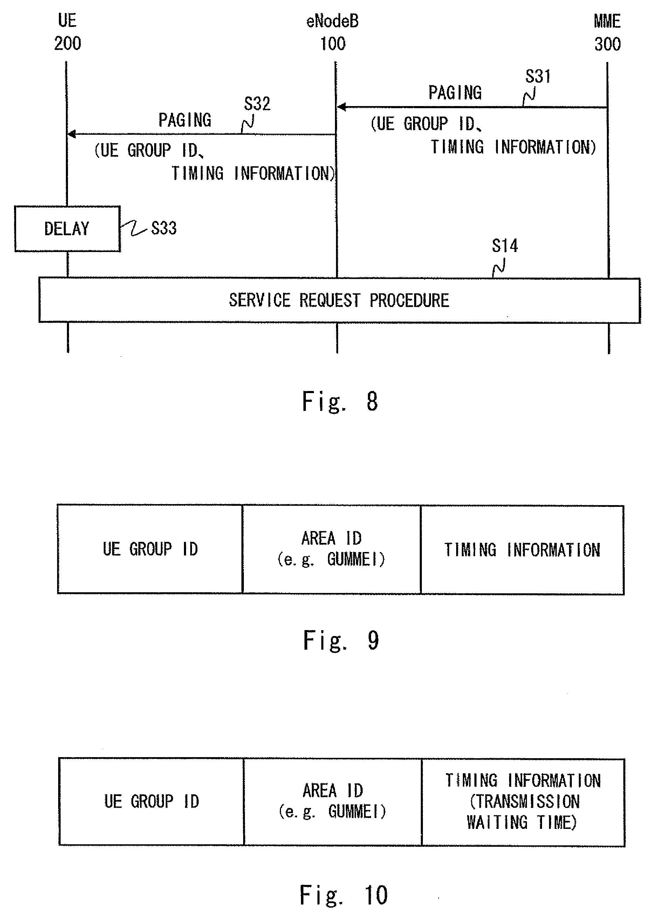

In the first embodiment motioned above, an example for paging each mobile station 200 is explained. This embodiment explains an example of paging by the unit of mobile-station group including a plurality of mobile stations 200. A configuration example of the mobile communication system according to this embodiment may be the same as that of the example according to the first embodiment shown in Fig. 1. Hereinafter, a specific example of a signaling procedure in this embodiment is explained with reference to Figs. 8 to 10.

Fig. 8 is a sequence diagram showing a paging procedure in this embodiment. In Step S31, the mobility management node 300 sends a paging request including a timing information to the base station 100 in a manner similar to Step S11 of Fig. 5. However, this paging request includes an identifier of a mobile-station group (UE-group ID) in place of the identifier of the mobile station 200 (UE ID). The UE group ID may be supplied to the mobile station 200 in advance or may be dynamically allocated to the mobile station 20 by the upstream network 10 when the mobile station 200 is attached to the upstream network 10.

In Step S32, the base station 100 sends the paging message that specifies the mobile station 200 on the downlink channel in response to receiving the paging request from the mobility management node 300. This paging message includes the UE group ID and the timing information. A configuration example of the paging message of this embodiment is shown in Fig. 9.

In Step S33, the mobile station 200 receives the paging message. Then, when the UE group ID contained in the paging message matches its own UE group ID, the mobile station 200 refers to the timing information contained in the paging message and delays execution of signaling (transmission of a service request) for communicating with the external network 9 according to the timing information.

As with Step S14 shown in Fig. 5, Step S14 of Fig. 8 is the same as the service request procedure in the case of receiving the normal paging message, thus the detailed explanation is omitted here.

As mentioned above, in this embodiment, paging including the timing information for delaying the communication start timing of the mobile station 200 is performed by the unit of the mobile-station group. This reduces the number of signals for the paging message at the time of paging a plurality of mobile stations 200. This embodiment is especially effective when it is necessary to page a number of mobile stations 200, for example, in the M2M network. That is, in this embodiment, in addition to distribution of the communication start timings of a number of mobile stations 200 by the timing information, paging is performed by the unit of mobile-station group to reduce the number of signals required for paging a number of mobile stations 200. This further facilitates smoothing of network load of the wireless communication system 1.

### <Third embodiment>

In this embodiment, a specific example of the timing information mentioned in the first and second embodiments is explained. A configuration example of a mobile communication system according to this embodiment may be the same as that of the example according to the first embodiment shown in Fig. 1. Moreover, a specific example of a signaling procedure in this embodiment may be the same as the sequence diagram shown in Fig. 5 or 8.

Fig. 10 shows a configuration example of a paging message of this embodiment. Note that when paging is performed for each mobile station 200, the UE group ID shown in Fig. 10 may be the UE ID. As shown in Fig. 10, in this embodiment, "transmission waiting time" is used as the timing information. The transmission waiting time of this embodiment is defined as an interval from reception of the paging message addressed to the mobile station itself until execution of signaling (a service request) for communicating with the external network 9. The transmission waiting time may be defined as the "maximum" waiting time imposed on the mobile station 20, which will be explained later. The transmission waiting time may be indicated as a multiple of a predetermined unit time (e.g., 100 milliseconds, 30 seconds, or 5 minutes) in the paging message.

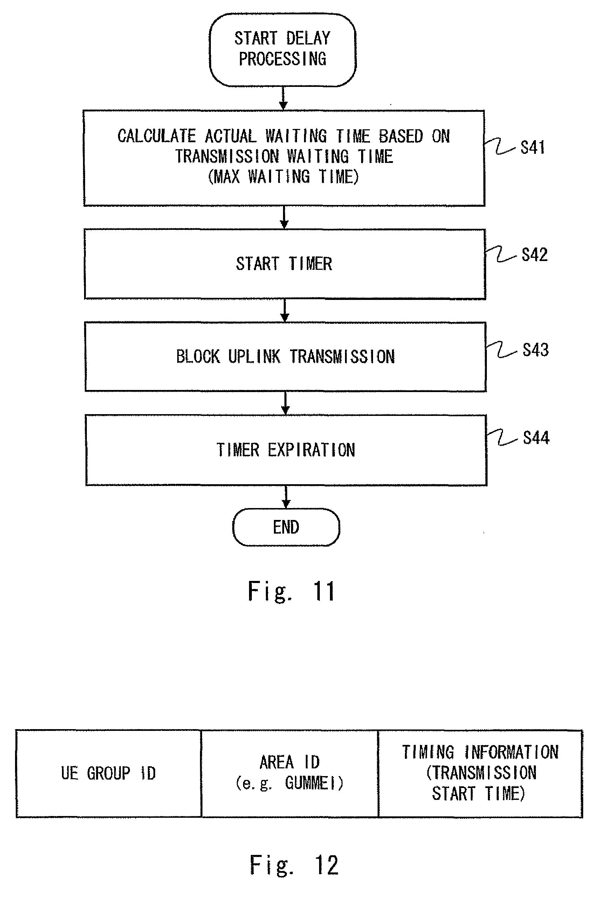

Fig. 11 is a flowchart showing a specific example of a procedure for processing the paging message by the mobile station 200 of this embodiment. Fig. 11 shows a specific example of Step S22 of the flowchart shown in Fig. 7, i.e., "delay processing of the Service Request procedure". Here, the transmission waiting time is defined as the "maximum" waiting time imposed on the mobile station 20. Therefore, in Step S41, the communication control unit 202 calculates the transmission waiting time which will be actually applied based on the transmission waiting time information (the maximum waiting time) contained in the paging message. For example, the communication control unit 202 may determine the transmission waiting time which will be actually applied at random within the range of the maximum waiting time.

In Step S42, the communication control unit 202 starts a timer set at the transmission waiting time which is actually applied. In Step S43, the communication control unit 202 blocks a communication initiated by the mobile station 200 (i.e., uplink transmission) until the expiration of the timer. That is, the communication control unit 202 performs a blocking operation not to accept uplink transmission until the timer expires. In Step S43, the communication control unit 202 may control the mobile station 200 to buffer the transmission data generated until the expiration of the timer.

In Step S44, the communication control unit 202 completes the delay processing in response to the expiration of the timer. After Step S44, the communication control unit 202 initiates the service request procedure as shown in Step S23 of Fig. 7. That is, the communication control unit 202 performs signaling for communicating with the external network 9 on condition that the transmission waiting time determined based on the timing information has elapsed.

### <Fourth embodiment>

In this embodiment, another specific example of the timing information mentioned in the first and second embodiments is explained. A configuration example of a mobile communication system according to this embodiment may be the same as that of the example of the first embodiment shown in Fig. 1. Moreover, a specific example of a signaling procedure in this embodiment may be the same as the sequence diagram shown in Fig. 5 or 8.

Fig. 12 shows a configuration example of a paging message of this embodiment. Note that when paging is performed for each mobile station 200, the UE group ID shown in Fig. 12 may be the UE ID. As shown in Fig. 12, in this embodiment, "transmission start time" is used as the timing information. The transmission start time of this embodiment is defined as time allowed to initiate signaling (a service request) for communicating with the external network 9. For example, the transmission start time specifies a specific time like "1:00 a.m." The transmission start time may be indicated as a multiple of a predetermined unit time (e.g., 100 milliseconds, 30 seconds, or 5 minutes) in the paging message.

Fig. 11 is a flowchart showing a procedure for processing the paging message by the mobile station 200 of this embodiment. Fig. 11 shows a specific example of Step S22 of the flowchart shown in Fig. 7, i.e., "delay processing of the Service Request procedure". In Step S51, the communication control unit 202 obtains the transmission start time contained in the paging message.

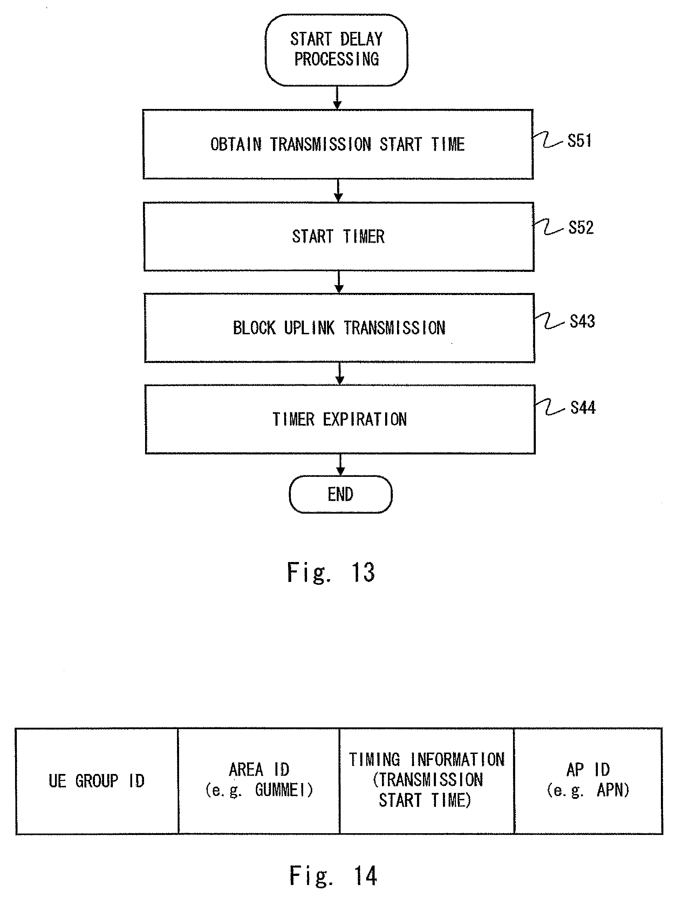

In Step S52, the communication control unit 202 starts the timer set to measure an arrival of the transmission start time. Steps 43 and 44 of Fig. 13 are the same as Steps S43 and S44 shown in Fig. 11. After Step S44, the communication control unit 202 initiates the service request procedure as shown in Step S23 of Fig. 7. That is, the communication control unit 202 performs signaling for communication with the external network 9 on the condition that the transmission start time has arrived.

### <Fifth embodiment>

In this embodiment, a further modification of the above first to fourth embodiments is explained. A configuration example of a mobile communication system according to this embodiment may be the same as that of the example of the first embodiment shown in Fig. 1. Moreover, a specific example of a signaling procedure in this embodiment may be the same as the sequence diagram shown in Fig. 5 or 8.

Fig. 14 shows a configuration example of a paging message in this embodiment. The paging message of this embodiment further includes an access point identifier (AP ID) that is associated with the external network 9 with which the mobile station 200 should communicate. In the case of LTE, an APN (Access Point Name) associated with the external network 9 may be used as the AP ID.

The mobile station 200 (the communication control unit 202) of this embodiment requests a connection (i.e., PDN connection) to the external network 9 corresponding to the AP ID contained in the paging message in the signaling (a service request) performed after the delay processing based on the timing information. The PDN connection means a configuration of a connection between an IP address of the mobile station 200 and the external network 9 represented by the APN. The upstream network 10, for which a PDN connection has been requested, establishes at least one EPS (Evolved Packet System) bearer including a default EPS bearer between the base station 200 and the transfer node 500.

Note that when the mobile station 200 supports the function to hold a plurality of PDN connections at the same time, the mobile station 200 can request the mobility management node 300 for an additional PDN connection to the AP ID specified in the paging message. Conversely, when the mobile station 200 does not support this function, the mobile station 200 may request the mobility management node 300 to disconnect the current PDN connection and then request the mobility management node 300 for an additional PDN connection to the AP ID specified in the paging message.

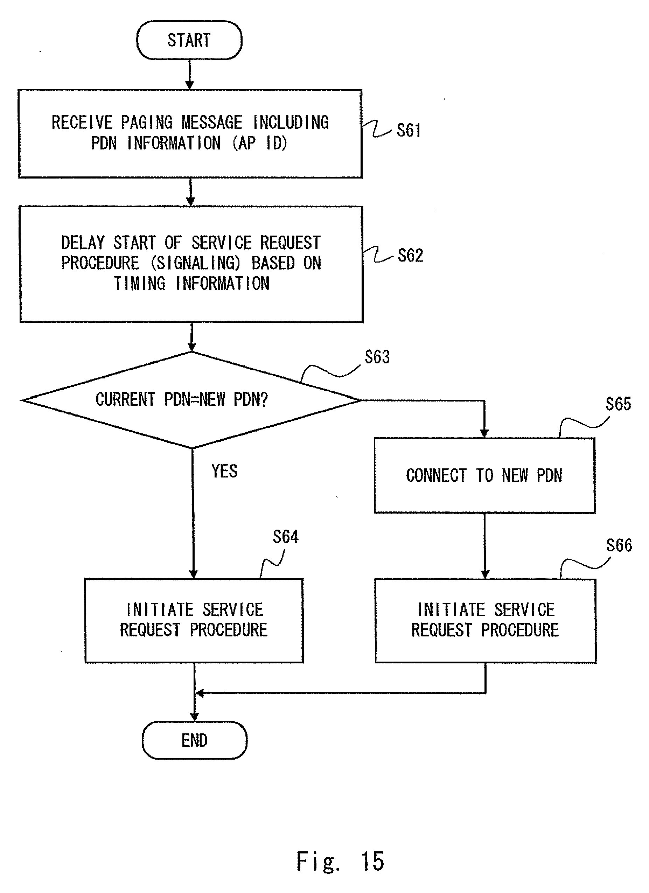

Fig. 15 is a flowchart showing a specific example of a procedure for processing the paging message by the mobile station 200 of this embodiment. In Step S61, the communication control unit 202 receives the external network (PDN) information, i.e., the paging message containing the AP ID, via the wireless communication unit 201. In Step S62, the communication control unit 202 delays signaling for initiating communication with the external network 9, i.e., a start timing of the service request procedure, based on the timing information contained in the paging message addressed to the mobile station itself.

The communication control unit 202 initiates the service request procedure according to Steps S63 to S66 on condition that the timing specified by the timing information arrives. In Step S63, the communication control unit 202 evaluates whether or not the current external network (PDN) and the new external network (PDN) specified in the paging message are the same. If they are the same (YES in Step S63), the communication control unit 202 initiates the service request procedure for the current external network (Step S64).

On the other hand, if the above networks are not the same (NO in Step S63), the communication control unit 202 performs signaling for requesting a connection to a new external network (a new PDN connection) (Step S65). Note that when the mobile station 200 does not support the function to hold a plurality of PDN connections at the same time, the communication control unit 202 performs signaling for requesting a disconnection of the PDN connection to the current external network prior to Step S65. In Step S66, the communication control unit 202 initiates the service request procedure for the new external network specified by the paging message.

As stated above, in this embodiment, the mobile station 200 can specify the external network with which the mobile station 200 will communicate using the paging message. Then, in this embodiment, it is possible to quickly switch the external network with which the mobile station 200 will communicate. Moreover, from reception of the paging message until the time identified by the timing information, the mobile station 200 can communicate with an external network different from the one at the time of receiving the paging message. Also in this case, the mobile station 200 of this embodiment can be certainly connected to the external network 9 to which the mobile station 200 was connected at the time of receiving the paging message.

### <Other embodiments>

The above first to fifth embodiments explained the wireless communication systems that support LTE. However, these embodiments may be applied to a system other than the LTE system. That is, these embodiments can be widely applied to a multiple access wireless communication system that performs paging of a mobile station. For example, in the case of a WCDMA system, the P-GW 500 explained in the first to fifth embodiments corresponds to a GGSN (Gateway GPRS Support Node), the S-GW 400 and the MME 300 explained in the first to fifth embodiments correspond to an SGSN (Serving GPRS Support Node), and the base station (NodeB) 100 explained in the first to fifth embodiments corresponds to an RNC (Radio Network Controller) and a NodeB. In the case of a WCDMA system, the SGSN sends a paging request to the RNC. The RNC requests the base station (NodeB) to send a downlink channel containing the paging message that specifies the mobile station 200 in response to receiving the paging request from the SGSN. The base station (NodeB) transmits the downlink channel containing the paging message in response to the request from the RNC.

The processing of the base station 100, the mobile station 200, and the mobility management node 300 related to the paging that has been explained in the first to fifth embodiments may be implemented by causing a computer such as a microprocessor, DSP (Digital Signal Processor), or the like to execute a program. More specifically, a program including instructions for causing a computer to execute an algorithm of each device explained using the sequence diagrams and flowcharts in Figs. 5, 7, 8, 11, 13, and 15 may be created and supplied to the computer.

This program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Moreover, the first to fifth embodiments can be combined as appropriate. Furthermore, the above embodiments are merely examples of application of a technical thought obtained by the inventor of the present application. That is, the technical thought is not limited to the above embodiments; it can instead be modified in various manners.

The present application claims the benefit of priority from Japanese Patent Application No. 2011-162412 filed on July 25, 2011, the entire contents of which are hereby incorporated by reference.

### Reference Signs List

- 1: MOBILE COMMUNICATION SYSTEM
- 10: UPSTREAM NETWORK
- 11: CORE NETWORK
- 9: EXTERNAL NETWORK
- 100: BASE STATION (eNodeB)
- 101: WIRELESS COMMUNICATION UNIT
- 102: CORE-SIDE INTERFACE
- 200: MOBILE STATION (USER EQUIPMENT (UE))
- 201: WIRELESS COMMUNICATION UNIT
- 202: COMMUNICATION CONTROL UNIT
- 300: MOBILITY MANAGEMENT NODE (MOBILITY MANAGEMENT ENTITY (MME))
- 301: INTERFACE
- 302: CONTROL UNIT
- 400: TRANSFER NODE (SERVING GATEWAY (S-GW))
- 500: TRANSFER NODE (PACKET DATA NETWORK GATEWAY (P-GW))

## Claims

1. A wireless communication system comprising:
a mobile station; and
an upstream network that sends a paging message for paging the mobile station,
wherein the paging message includes first information that specifies a timing for the mobile station to initiate communication with an external network in response to receiving the paging message.

2. The wireless communication system according to Claim 1, wherein the mobile station delays execution of signaling for communicating with the external network based on the first information.

3. The wireless communication system according to Claim 1 or 2, wherein the mobile station changes, based on the first information, an interval from reception of the paging message until execution of signaling for communicating with the external network.

4. The wireless communication system according to any one of Claims 1 to 3, wherein the upstream network sends the paging message to autonomously initiate communication between the mobile station and the external network regardless of whether downlink data to be transferred to the mobile station arrives from the external network.

5. The wireless communication system according to any one of Claims 1 to 3, wherein the upstream network sends the paging message in response to receiving the downlink data to be transferred to the mobile station from the external network.

6. The wireless communication system according to any one of Claims 1 to 5, wherein
the mobile station includes a plurality of mobile stations, and
the paging message further includes a mobile-station group identifier associated with the plurality of mobile stations.

7. The wireless communication system according to any one of Claims 1 to 6, wherein
the first information includes information capable of identifying a transmission waiting time, and
the mobile station performs signaling for communicating with the external network on condition that the transmission waiting time has elapsed after receiving the paging message.

8. The wireless communication system according to any one of Claims 1 to 6, wherein
the first information includes information capable of identifying a transmission start time, and
the mobile station performs signaling for communicating with the external network on condition that the transmission start time arrives.

9. The wireless communication system according to any one of Claims 1 to 8, wherein the mobile station buffers transmission data to the external network until the communication with the external network is initiated.

10. The wireless communication system according to any one of Claims 1 to 9, wherein
the paging message further includes an access point identifier associated with the external network, and
the mobile station performs signaling for requesting a connection to the external network based on the access point identifier.

11. The wireless communication system according to any one of Claims 1 to 10, wherein the upstream network comprises:
a base station that wirelessly transmits the paging message using a downlink channel; and
a control node that requests the base station to send the paging message.

12. A base station used in a wireless communication system, the base station comprising:
wireless communication means for wirelessly sending a paging message to page a mobile station on a downlink channel,
wherein the paging message includes first information that specifies a timing for the mobile station to initiate communication with an external network in response to receiving the paging message.

13. The base station according to Claim 12, further comprising a control interface that receives a transmission request of the paging message from a control node included in the wireless communication system.

14. The base station according to Claim 12 or 13, wherein the wireless communication means sends the paging message to autonomously initiate communication between the mobile station and the external network regardless of whether downlink data to be transferred to the mobile station arrives at the wireless communication system from the external network.

15. The base station according to Claim 13, wherein the transmission request is sent from the control node to autonomously initiate communication between the mobile station and the external network regardless of whether downlink data to be transferred to the mobile station arrives at the wireless communication system from the external network.

16. The base station according to Claim 13, wherein the transmission request is sent from the control node when the downlink data to be transferred to the mobile station arrives at the wireless communication system from the external network.

17. The base station according to any one of Claims 12 to 16, wherein
the mobile station includes a plurality of mobile stations, and
the paging message further includes a mobile-station group identifier associated with the plurality of mobile stations.

18. The base station according to any one of Claims 12 to 17, wherein the first information further includes an access point identifier associated with the external network.

19. A control node used in a wireless communication system, the control node comprising:
control means for requesting a base station to send a paging message to page a mobile station,
wherein the paging message includes first information that specifies a timing for the mobile station to initiate communication with an external network in response to receiving the paging message.

20. The control node according to Claim 19, wherein the control means requests the base station to send the paging message to autonomously initiate communication between the mobile station and the external network regardless of whether downlink data to be transferred to the mobile station arrives from the external network.

21. The control node according to Claim 19, wherein the control means requests the base station to send the paging message when the downlink data to be transferred to the mobile station arrives from the external network.

22. The control node according to any one of Claims 19 to 21, wherein
the mobile station includes a plurality of mobile stations, and
the paging message further includes a mobile-station group identifier associated with the plurality of mobile stations.

23. A mobile station used in a wireless communication system, the mobile station comprising:
wireless communication means for receiving a downlink channel transmitted from a base station; and
communication control means for initiating communication with an external network in response to a paging message transmitted on the downlink channel,
wherein the paging message includes first information that specifies a timing for the mobile station to initiate the communication with the external network in response to receiving the paging message.

24. The mobile station according to Claim 23, wherein the communication control means delays execution of signaling for communicating with the external network based on the first information.

25. The mobile station according to Claim 23 or 24, wherein the communication control means changes, based on the first information, an interval from reception of the paging message until execution of signaling for communicating with the external network.

26. The mobile station according to any one of Claims 23 to 25, wherein the paging message is sent to autonomously initiate communication between the mobile station and the external network regardless of whether downlink data to be transferred to the mobile station arrives at the wireless communication system from the external network

27. The mobile station according to any one of Claims 23 to 25, wherein the paging message is sent when the downlink data to be transferred to the mobile station arrives at the wireless communication system from the external network.

28. The mobile station according to any one of Claims 23 to 27, wherein the paging message further includes a mobile-station group identifier associated with a plurality of mobile stations.

29. The mobile station according to any one of Claims 23 to 28, wherein
the first information includes information capable of identifying a transmission waiting time, and
the communication control means performs signaling for communicating with the external network on a condition that the transmission waiting time has elapsed after receiving the paging message.

30. The mobile station according to any one of Claims 23 to 28, wherein
the first information includes information capable of identifying a transmission start time, and
the mobile station performs signaling for communicating with the external network on a condition that the transmission start time arrives.

31. The mobile station according to any one of Claims 23 to 30, further comprising:
buffer means for buffering transmission data to the external network until the communication with the external network is initiated.

32. The mobile station according to any one of Claims 23 to 31, wherein
the paging message further includes an access point identifier associated with the external network, and
the communication control means performs signaling for requesting a connection to the external network based on the access point identifier.

33. A paging method comprising:
sending, in order to page a mobile station, a paging message including first information specifying a timing for the mobile station to initiate communication with an external network in response to receiving the paging message.

34. A method for processing a paging message by a mobile station, the method comprising:
initiating communication with an external network in response to a paging message transmitted on a downlink channel from a base station,
wherein the paging message includes first information that specifies a timing for the mobile station to initiate the communication with the external network in response to receiving the paging message.

35. A non-transitory computer readable medium storing a program for causing a computer to execute a method for control related to paging, the method comprises:
controlling, in order to page a mobile station, transmission of a paging message including first information specifying a timing for the mobile station to initiate communication with an external network in response to receiving the paging message.

36. A non-transitory computer readable medium storing a program for causing a computer to execute a method for processing a paging message, the method comprising:
initiating communication with an external network in response to a paging message transmitted on a downlink channel from a base station,
wherein the paging message includes first information that specifies a timing for the mobile station to initiate the communication with the external network in response to receiving the paging message.
